(19) Europäisches Patentamt / European Patent Office / Office européen des brevets

(11) **EP 4 049 544 B1**

(12) **EUROPEAN PATENT SPECIFICATION**

(45) Date of publication and mention
of the grant of the patent:
**06.03.2024   Bulletin 2024/10**

(21) Application number: **22152883.9**

(22) Date of filing: **24.01.2022**

(51) International Patent Classification (IPC):
*A23L 33/15* (2016.01)      *A23C 9/152* (2006.01)
*A23C 9/156* (2006.01)      *A23C 9/158* (2006.01)
*A23C 9/16* (2006.01)       *A23C 21/04* (2006.01)
*A23C 21/06* (2006.01)      *A23C 21/08* (2006.01)
*A23C 21/10* (2006.01)      *A23L 33/16* (2016.01)
*A23L 33/175* (2016.01)     *A23L 33/18* (2016.01)
*A23L 33/19* (2016.01)      *A23L 33/00* (2016.01)

(52) Cooperative Patent Classification (CPC):
**A23L 33/15; A23C 21/04; A23C 21/06;
A23C 21/08; A23C 21/10; A23L 33/16;
A23L 33/175; A23L 33/18; A23L 33/19;
A23L 33/40**

(54) **MILK POWDER PREPARATION METHOD AND FORMULA TO INCREASE THE CHILDREN'S HEIGHT**

VERFAHREN ZUR HERSTELLUNG VON MILCHPULVER UND FORMEL ZUR STEIGERUNG DER KÖRPERGRÖSSE VON KINDERN

PROCÉDÉ ET FORMULE DE PRÉPARATION DE LAIT EN POUDRE POUR AUGMENTER LA TAILLE DES ENFANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021   CN 202110218503**

(43) Date of publication of application:
**31.08.2022   Bulletin 2022/35**

(73) Proprietor: **Guangzhou Maile Biotech Co., Ltd.
Guangzhou, Guangdong 510000 (CN)**

(72) Inventor: **ZHOU, Xia
Guangzhou, Guangdong 510000 (CN)**

(74) Representative: **JD&P Patent Attorneys
Joanna Dargiewicz & Partners
Ul. Mysliborska 93A/50
03-185 Warszawa (PL)**

(56) References cited:
**EP-A1- 0 520 581      CN-A- 110 063 371
CN-A- 110 927 029      CN-A- 111 937 964**

• **O'MAHONY NIALL ET AL: "Real-time monitoring of powder blend composition using near infrared spectroscopy", 2017 ELEVENTH INTERNATIONAL CONFERENCE ON SENSING TECHNOLOGY (ICST), IEEE, 4 December 2017 (2017-12-04), pages 1-6, XP033325523, DOI: 10.1109/ICSENST.2017.8304431 [retrieved on 2018-02-27]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates generally to the food processing technology field, and more particularly, to a milk powder preparation method and formula to increase the children's height.

### Description of the related art

Child nutrition specialists point out that the period between 3 and 6 years is critical for the intellectual, physical and emotional development of preschool children. The children at this stage grow and develop rapidly, and their metabolism is vigorous. Therefore, the balanced and comprehensive nutrition support is required.

There are many types of milk powder, such as elderly milk powder, infant milk powder, milk powder for pregnant women, adult milk powder, and high-calcium milk powder, among others. The milk powder is divided into different types according to the needs of different populations, thus producing different effects. The parents always hope that their kids can grow up healthily with the tall height. The people's height increases continuity during some specific stages, of which the most important stage is the period from birth to adolescence. The growth in height before 6 years old imposes a significant impact on the final height of the adult. The use of the height level or height growth rate at home and abroad significantly lags behind the definition of the growth retardation of the children with the same genetic background and same sex. The data of the national nutrition survey conducted once every ten years in China shows that the growth and development situation of a considerable proportion of the preschool children in our country is not satisfactory, especially the children in the western suburbs and rural areas. Affected by economic, cultural, medical and health care and other factors, their growth and development lags behind that of the urban children, and the growth retardation rate is significantly higher than that of other regions. There are many ways to enable children to grow taller than the normal height, but the parents generally select the milk powder to increase the height of their kids so as to supplement the nutrients required for the kids' development and growth. However, most of the traditional milk powder for children's height growth have problems, such as the low calcium content, low absorption rate, few nutrients and poor effects, among others, so they cannot satisfy the needs of the children's height growth. Chinese patent (CN 111937964 A) discloses a method for producing infant formula milk powder, including: sterilizing the packages; pre-mixing calcium carbonate, hydrolyzed egg yolk powder, bovine colostrum powder, N-acetylneuraminic acid, lactoferrin, and docosahexaenoic acid; following checking of the composition of the powder, the pre-mix is mixed with whole milk powder and whey powder; and automatic packaging of the powder through the vibrating screen and filter mesh. European patent (EP 0520581 A1) discloses a method for preparing a product similar to low-fat milk by physical modification of a whey protein solution. O'MAHONY NIALL ET AL, in "Real-time monitoring of powder blend composition using near infrared spectroscopy", 2017 ELEVENTH INTERNATIONAL CONFERENCE ON SENSING TECHNOLOGY (ICST), IEEE, 4 December 2017, pages 1-6, XP033325523 DOI: 10.11 09/ICSENST.2017.8304431 [retrieved on 2018-02-27, generalizes "NIR can be used to measure many process parameters, primarily chemical composition, molecular weight and particle size and also moisture, pH, temperature and other parameters relating to the molecular structure of the material under test". Chinese patent (CN 110927029 A) discloses a detection method based on particle size analysis characterized by including multiple sampling of real-time particle size distribution curve of the powder mixture. However, the prior art fails to improve the calcium ion content of the milk powder through precisely controlling the processing procedure of the dry process.

Currently, there are several milk powder preparation methods and formulas thereof to increase the children's height, but the calcium content thereof is generally low. Furthermore, it cannot guarantee that the various nutrients that increase the children's height can be absorbed as much as possible.

### Summary of the invention

Accordingly, the present invention has an object to provide a milk powder preparation method and formula to increase the children's height, which can effectively solve the technical problem that the calcium ion content of the milk powder cannot be improved and the optimal water dissolution temperature cannot be determined through precisely controlling the processing procedure of the dry process.

The invention is set out in the appended set of claims. Any examples and contents that do not completely correspond to the scope of the claims are only for illustrative purpose, or to highlight the effect of a particular aspect or feature.

In order to achieve the said object, the present invention involves a milk powder preparation method to increase the children's height, comprising:

Step 1: sterilizing packages of whey powder and various minor ingredients, mixers and packaging machines;

Step 2: adding the said whey powder into the said mixer through a 1st feed inlet, adding milk calcium into the said mixer through a 2nd feed inlet, starting a stirring propeller, and mixing the mixture evenly to obtain a 1st mixture;

Step 3: if a central control unit determines that a calcium ion content of the said 1st mixture satisfies a standard requirement, adding weighed hydrolyzed egg yolk powder, colostrum basic protein, whey protein powder, N-acetylneuraminic acid, lactoferrin, bovine colostrum, docosahexaenoic acid, tryptophan, lysine, apples and vitamins into the said mixer in order through a 3rd feed inlet, start the said stirring propeller, and mix the mixture evenly to obtain a 2nd mixture;

Step 4: conveying the said 2nd mixture to the packaging machine through a powder conveying pipe for sub-packaging;

During the said process of generating the 1st mixture, the central control unit introduces the 1st mixture into a calcium ion detector through controlling a 1st powder outlet, measures an actual calcium ion content of the 1st mixture, and then adds other minor ingredients provided that the actual calcium ion content satisfies the standard requirement: if the said central control unit determines that the calcium ion content fails to satisfy the standard requirement, the central control unit determines the increase of the milk calcium or collagen peptide according to the calcium ion content and pH value of the 1st mixture solution so as to adjust the calcium ion content of the 1st mixture;

The said central control unit is configured with the standard calcium ion content, including the 1st standard calcium ion content g1 and the 2nd standard calcium ion content g2, where g1 < g2;

During the process of generating the 1st mixture, the said central control unit sets the actual calcium ion content measured with the calcium ion detector to g, after the configuration is completed, the central control unit compares the actual calcium ion content g with the standard calcium ion content;

If g<g1, the said central control unit determines that the calcium ion content of the 1st mixture fails to satisfy the standard requirement, and adds the milk calcium through controlling the said 2nd feed inlet;

If g1≤g<g2, the said central control unit determines that the calcium ion content of the 1st mixture satisfies the standard requirement; and

If g≥g2, the said central control unit determines that the calcium ion content of the said 1st mixture fails to satisfy the standard requirement, and adds the collagen peptide through controlling the said 3rd feed inlet;

During the said process of generating the 2nd mixture, the said central control unit introduces the 2nd mixture into a milk powder laser particle size analyzer through controlling a 2nd powder outlet, analyzes a particle size of the 2nd mixture, then determines whether the 2nd mixture is evenly mixed according to analysis results and the optimal water dissolution temperature when the mixture is evenly mixed;

During the process of generating the said 2nd mixture provided that the said central control unit determines that the calcium ion content of the 1st mixture satisfies the standard requirement, the central control unit obtains an actual average particle size of the 2nd mixture, and records it as Lp through comparing the analytical line spectrum of the actual particle size obtained from the milk powder laser particle size analyzer with an analytical line spectrum of the standard particle size saved in the central control unit; meanwhile, the central control unit is configured with a standard average particle size L0, after the configuration is completed, the central control unit compares the actual average particle size Lp with the standard average particle size L0:

If Lp>L0, the said central control unit determines that the 2nd mixture has not been mixed well, so it starts a crushing propeller to crush the 2nd mixture;

If Lp≤L0, the said central control unit determines that the 2nd mixture has been mixed evenly;

The said central control unit is configured with a preset average particle size difference, and a rotation speed and a crushing time of the crushing propeller; the said preset average particle size difference includes the 1st preset average particle size difference △L1, the 2nd preset average particle size difference △L2 and the 3rd preset average particle size difference △L3, where △L1 < △L2 < △L3 < 100;

The said rotation speed of the crushing propeller includes a 1st rotation speed V1, a 2nd rotation speed V2, a 3rd rotation speed V3 and a 4th rotation speed V4 of the crushing propeller, where V1<V2<V3<V4<3,000 r/min; the said crushing time of the crushing propeller includes a 1st crushing time t1, a 2nd crushing time t2, a 3rd crushing time t3 and a 4th crushing time t4 of the crushing propeller, where t1<t2<t3<t4<30 min;

If the said central control unit determines that the 2nd mixture has not been mixed well, and starts the crushing propeller to crush the 2nd mixture, the central control unit calculates the average particle size difference △L with the following formula:

$$\triangle L = Lp - L0;$$

After the calculation is completed, the said central control unit compares the average particle size difference △L with the preset average particle size difference as follows:

If $\Delta L < \Delta L1$, the said central control unit determines that the rotation speed of the said crushing propeller is V1, and the crushing time thereof is t1;

If $\Delta L1 \leq \Delta L < \Delta L2$, the said central control unit determines that the rotation speed of the said crushing paddle is V2, and the crushing time thereof is t2;

If $\Delta L2 \leq \Delta L < \Delta L3$, the said central control unit determines that the rotation speed of the said crushing propeller is V3, and the crushing time thereof is t3;

If $\Delta L \geq \Delta L3$, the said central control unit determines that the rotation speed of the said crushing propeller is V4, and the crushing time thereof is t4;

If the said central control unit determines that the rotation speed of the said crushing propeller is Vi, and the crushing time thereof is ti, the central control unit adjusts the rotation speed thereof to Vi and the crushing time thereof to ti through controlling a regulating valve of the crushing propeller; afterwards, the central control unit starts the crushing propeller, and sets i=1, 2, 3 and 4.

Furthermore, the said central control unit is configured with the standard viscosity and the coefficient of the calcium ion content difference. The said standard viscosity includes the 1st standard viscosity $\eta1$, the 2nd standard viscosity $\eta2$ and the 3rd standard viscosity $\eta3$, where $\eta1 < \eta2 < \eta3 < 2.5$. The coefficient of the calcium ion content difference includes the 1st coefficient $\delta1$, the 2nd coefficient $\delta2$, the 3rd coefficient $\delta3$ and the 4th coefficient $\delta4$ thereof, all of which are not equal to each other;

If the said central control unit determines that the calcium ion content of the said 1st mixture fails to satisfy the standard requirement, and adds the milk calcium through controlling the said 2nd feed inlet, the central control unit measures the viscosity through introducing the 1st mixture solution in the said calcium ion detector to the viscosity detector via the 1st solution outlet, and sets the actually measured viscosity to $\eta$. After the configuration is completed, the central control unit compares the actual viscosity $\eta$ with the standard viscosity:

If $\eta < \eta1$, the said central control unit selects $\delta1$ to calculate the calcium ion content difference;

If $\eta1 \leq \eta < \eta2$, the said central control unit selects $\delta2$ to calculate the calcium ion content difference;

If $\eta2 \leq \eta < \eta3$, the said central control unit selects $\delta3$ to calculate the calcium ion content difference;

If $\eta \geq \eta3$, the said central control unit selects $\delta4$ to calculate the calcium ion content difference;

If the said central control unit selects the i-th coefficient $\delta i$ of the calcium ion content difference to calculate the calcium ion content difference, the central control unit calculates the calcium ion content difference with the formula of $\triangle g = (g1-g) \times \delta i$, and sets i=1, 2, 3 and 4.

Furthermore, the central control unit is configured with the standard calcium ion content difference and milk calcium increase. The said standard calcium ion content difference comprises the 1st difference $\triangle g1$, the 2nd difference $\triangle g2$ and the 3rd difference $\triangle g3$ of the standard calcium ion content, where $\triangle g1 < \triangle g2 < \triangle g3 < 100$. The increase of the said milk calcium comprises the 1st increase mg1, the 2nd increase mg2, the 3rd increase mg3 and the 4th increase mg4 of the milk calcium, where mg1 < mg2 < mg3 < mg4;

After the calcium ion content difference $\triangle g$ is calculated, the said central control unit compares the calcium ion content difference $\triangle g$ with the standard calcium ion content difference:

If $\triangle g < \triangle g1$, the said central control unit adds the milk calcium through controlling the 2nd feed inlet, and sets the increase of the milk calcium to mg1;

If $\triangle g1 \leq \triangle g < \triangle g2$, the said central control unit adds the milk calcium through controlling the 2nd feed inlet, and sets the increase of the milk calcium to mg2;

If $\triangle g2 \leq \triangle g < \triangle g3$, the said central control unit adds the milk calcium through controlling the 2nd feed inlet, and sets the increase of the milk calcium to mg3;

If $\triangle g \geq \triangle g3$, the said central control unit adds the milk calcium through controlling the 2nd feed inlet, and sets the increase of the milk calcium to mg4.

Furthermore, the said central control unit is configured with the preset standard pH value, comprising the 1st preset standard pH value, the 2nd preset standard pH value, and the 3rd preset standard pH value, where P1 < P2 < P3 < 13;

If the said central control unit determines that the calcium ion content of the said 1st mixture fails to satisfy the standard requirement, and adds the collagen peptide through controlling the said 3rd feed inlet, the central control unit make measurements through introducing the 1st mixture solution in the said calcium ion detector to the viscosity detector via the 2nd solution outlet, and sets the actually measured viscosity to P. After the configuration is completed, the central control unit compares the actual viscosity P with the preset standard viscosity:

If P < P1, the said central control unit adds the collagen peptide through controlling the 3rd feed inlet, and sets the increase thereof to $mj1 = 10 \times mg1$;

If $P1 \leq P < P2$, the said central control unit adds the collagen peptide through controlling the 3rd feed inlet, and sets the increase thereof to $mj2 = 20 \times mg2$;

If $P2 \leq P < P3$, the said central control unit adds the collagen peptide through controlling the 3rd feed inlet, and sets the increase thereof to $mj3 = 30 \times mg3$;

If $P \geq P3$, the said central control unit adds the collagen peptide through controlling the 3rd feed inlet, and sets the increase thereof to $mj4 = 40 \times mg3$.

Compared with the prior art, the beneficial effect of the present invention is that the present invention can improve the calcium ion content of the milk powder, and maximize the absorption of the nutrients in the milk powder through adjusting the calcium ion content of the milk powder according to the calcium ion content measured in the process of the milk powder preparation, and determining the optimal water dissolution temperature via the particle size analysis. Through measuring the actual calcium ion content of the 1st mixture with the calcium ion detector, if the calcium ion content satisfies the standard requirement, the present invention will add other minor ingredients, and if the actual calcium ion content fails to satisfies the standard requirement, the present invention will determine the increase of the milk calcium or collagen peptide according to the calcium ion content and pH value of the 1st mixture solution so as to adjust the calcium ion content of the 1st mixture. Through analyzing the particle size of the 2nd mixture with the milk powder laser particle size analyzer, the present invention can determine whether the 2nd mixture has been mixed well according to the analysis results, and the optimal water dissolution temperature if the mixture has been mixed well. In this way, the present invention can determine the increase of the milk calcium or collagen peptide through precisely controlling the processing procedure of the dry process so as to increase the calcium ion content of the milk powder. Meanwhile, the present invention can determine the standard particle size of the milk powder and the optimal water dissolution temperature through the particle size analysis. In this way, the present invention can maximize the absorption of the nutrients in the milk powder to promote the height growth through effectively increasing the calcium ion content of the milk powder and determining the optimal water dissolution temperature.

Furthermore, the present invention determines whether the calcium ion content of the 1st mixture satisfies the standard requirement through comparing the actual calcium ion content g with the standard calcium ion content, and then determines the increase of the milk calcium or collagen peptide through precisely controlling the processing procedure of the dry process so as to increase the calcium ion content of the milk powder. Meanwhile, the present invention determines the standard particle size of the milk powder and the optimal water dissolution temperature through the particle size analysis. In this way, the present invention can maximize the absorption of the nutrients in the milk powder to promote the height growth through effectively increasing the calcium ion content of the milk powder and determining the optimal water dissolution temperature.

Furthermore, the present invention determines the increase of the milk calcium through comparing the calcium ion content difference $\triangle g$ with the standard calcium ion content difference, and further effectively improves the calcium ion content of the milk powder through precisely controlling the calcium ion content of the milk powder.

Furthermore, the present invention determines the increase of the collagen peptide through comparing the actual pH value P with the preset standard pH value, and further effectively improves the calcium ion content of the milk powder through precisely controlling the calcium ion content of the milk powder.

Furthermore, the present invention determines whether the 2nd mixture has been mixed well through comparing the actual average particle size Lp with the standard average particle size L0, and then maximize the absorption of nutrients in the milk powder for increasing the children's height through effectively increasing the calcium ion content of the milk powder and determining the optimal water temperature.

Furthermore, the present invention determines the rotation speed and crushing time of the crushing propeller through comparing the average particle size difference $\triangle L$ with the preset average particle size difference so as to ensure that the particle size of the said milk powder involved in the present invention is within the standard particle size, and then maximize the absorption of nutrients in the milk powder for increasing the children's height through effectively increasing the calcium ion content of the milk powder and determining the optimal water temperature.

Furthermore, the milk calcium involved in the present invention can supplement the calcium, increase the height growth, and promote the collagen structure at the low calcium level so as to improve the bone strength, that is to prevent the osteoporosis. The hydrolyzed egg yolk powder not only prevents the children's osteoporosis, but also promotes their bone growth effectively through stimulating bone bud cells and thus promoting the production of the bone growth factor. The colostrum basic protein promotes the growth of bone cells, increases the bone density and bone weight, which is beneficial to the growth of children. The whey protein powder contains immunoglobulin IgG, which can enhance children's immunity. The sialic acid in the N-acetylneuraminic acid can prevent the invasion of germs. The lactoferrin can regulate the immunity and defend against pathogenic microorganisms. The tryptophan can promote growth and increase appetite. The lysine can increase the calcium absorption, and promote the bone growth. The apple can supplement minerals and vitamins. The vitamin can promote the calcium absorption. Compared with the prior art, the milk powder described in the present invention has the significantly increased calcium ion content and is rich in nutrients, so it can effectively promote the children's height growth.

## Brief description of the drawings

FIG. 1 shows a schematic structural diagram of the milk powder preparation device to increase the children's height according to an embodiment of the present invention.

FIG. 2 shows a schematic flow chart of the milk powder preparation method to increase the children's height according to an embodiment of the present invention.

Description of the marks in the figure: 1. Mixer; 11. The 1st feed inlet; 12. The 2nd feed inlet; 13. The 3rd feed inlet; 14. Stirring propeller; 141. Regulating valve of the stirring propeller; 15. Crushing propeller; 151. Regulating valve of the crushing propeller; 16. The 1st powder outlet; 17. The 2nd powder outlet; 18. Powder conveying pipe; 2. Calcium ion detector; 21. The 1st solution outlet; 22. The 2nd solution outlet; 3. Milk powder laser particle size analyzer; 4. pH detector; 5. Viscosity detector; 6. Packaging machine.

## Description of the preferred embodiment

In order to explain the objectives and advantages of the present invention clearly, let's take an embodiment to describe the present invention in details. It should be understood that the embodiment described herein is only used to explain the present invention, rather than to limit the present invention.

The preferred embodiment of the present invention is described below by referring to the drawings. The technical staff in this field needs to understand that these embodiments are only used to explain the technical principles of the present invention, rather than to limit the protection scope of the present invention.

It should be explained that in the description of the present invention, the terms of "Top", "Bottom", "Left", "Right", "Inside" and "Outside" that indicate the direction or position relationship refer to the direction or position relationship shown in the drawings, which are only used for the easy description, rather than for indicating or implying that the said device or component must have a specific direction, or be constructed and operated in a specific direction. Therefore, these terms cannot be regarded as a limit to the present invention.

In addition, it should be explained that in the description of the present invention, unless otherwise expressly specified and limited, the terms of "Installation", "Connect to", and "Connection" should be understood in a broad sense. For example, it can be the fixed connection, removable connection, integrated connection, mechanical connection, electrical connection, direct connection, indirect connection through an intermediate medium, or internal connection between two components. The technical staff in this field can interpret the specific meaning of the said terms in the present invention according to the specific circumstances.

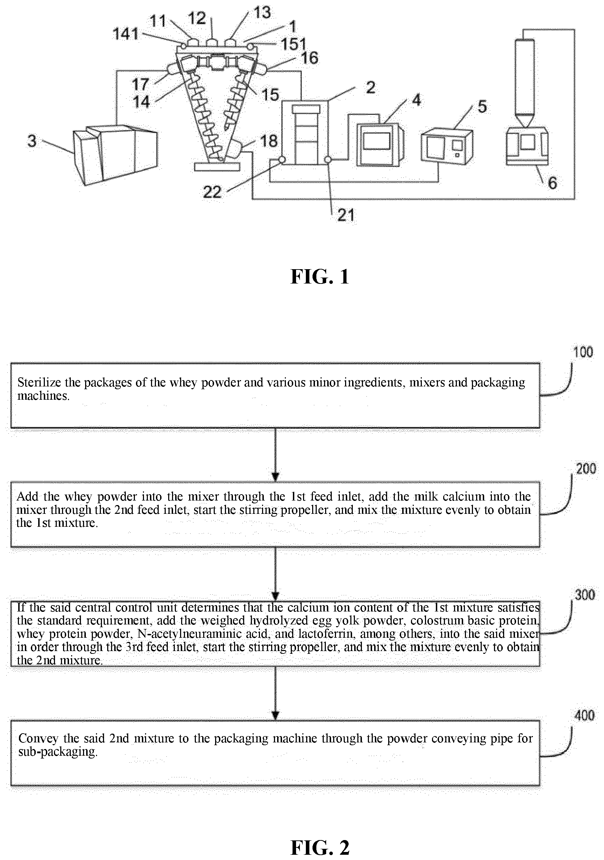

FIG. 1 shows the schematic structural diagram of the milk powder preparation device to increase the children's height according to the embodiment of the present invention, comprising:

1. Mixer; 2. Calcium ion detector; 3. Milk powder laser particle size analyzer; 4. pH detector; 5. Viscosity detector, and 6. Packaging machine. The mixer (1) is connected to the calcium ion detector (2), milk powder laser particle size analyzer (3), and packaging machine (6) respectively, the calcium ion detector (2) is connected to the mixer (1), pH detector (4) and viscosity detector (5) respectively, and the mixer (1) is used to mix or crush the raw ingredients and minor ingredients for preparing milk powder. The calcium ion detector (2) is used to detect the actual calcium ion content of the 1st mixture. The milk powder laser particle size analyzer (3) is used to analyze the particle size of the 2nd mixture. The pH detector (4) is used to detect the pH value of the 1st mixture solution. The viscosity detector (5) is used to detect the viscosity of the 1st mixture solution. The packaging machine (6) is used to sub-package the prepared milk powder;

The said mixer (1) is configured with the 1st feed inlet (11), the 2nd feed inlet (12) and the 3rd feed inlet (13), all of which are installed on the upper side of the mixer (1). The 1st feed inlet (11) is used to put the whey powder into the said mixer (1), and the 2nd feed inlet (12) is used to put the milk calcium into the mixer (1), and the 3rd feed inlet (13) is used to add various minor ingredients;

Additionally, the said mixer (1) is configured with the stirring propeller (14), the regulating valve (141) thereof, the crushing propeller (15) and the regulating valve (151) thereof. Both the stirring propeller (14) and the crushing propeller (15) are installed in the mixer (1). The regulating valve (141) of the stirring propeller is connected to the stirring propeller (14), and installed on the upper side of the mixer (1). The stirring propeller (14) is used to evenly mix the raw ingredients and minor ingredients for preparing the milk powder. The stirring propeller's regulating valve (141) is used to adjust the stirring time and rotation speed of the stirring propeller (14). The crushing propeller (15) is used to crush the raw ingredients and minor ingredients for preparing the milk powder when the particle size fails to satisfy the standard requirement. The crushing propeller's regulating valve (151) is used to adjust the rotation speed and crushing time of the crushing propeller (15);

In addition, the mixer (1) is configured with the 1st powder outlet (16), the 2nd powder outlet (17) and the powder conveying pipe (18), all of which are installed on the side of the mixer (1). The 1st powder outlet (16) is connected to the said calcium ion detector (2), which is used to introduce the 1st mixture into the calcium ion detector (2). The 2nd powder outlet (17) is connected to the said milk powder laser particle size analyzer (3), which is used to introduce the 2nd mixture into the milk powder laser particle size analyzer (3). The powder conveying pipe (18) is connected to the said packaging machine (6), which is used to transport the milk powder to the packaging machine (6);

The said calcium ion detector (2) is configured with the 1st solution outlet (21) and the 2nd solution outlet (22). The 1st solution outlet (21) is connected to the viscosity detector (5), which is used to introduce the 1st mixture solution into the viscosity detector (5). The 2nd solution outlet (22) is connected to the pH detector (4), which is used to introduce the 1st mixture solution in the calcium ion detector (2) to the pH detector (4);

The milk powder preparation device also comprises a central control unit (which is not shown in the figure), which is connected to the mixer (1), the calcium ion detector (2), the milk powder laser particle size analyzer (3), the pH detector (4), the viscosity detector (5) and the packaging machine (6) respectively in a wireless manner so as to control the milk powder preparation process.

In combination of the milk powder preparation device to increase the children's height as shown in FIG. 1 and with reference to the schematic flow chart of the milk powder preparation method to increase the children's height according to the embodiment of the present invention as shown in FIG. 2, the milk powder preparation method to increase the children's height according to the embodiment of the present invention comprises:

Step 1: Sterilize the packages of the whey powder and various minor ingredients, mixer (1) and packaging machine (6);

Step 2: Add the said whey powder into the said mixer (1) through the 1st feed inlet (11), add the milk calcium into the said mixer (1) through the 2nd feed inlet (12), start the stirring propeller (14), and mix the mixture evenly to obtain the 1st mixture;

Step 3: If the central control unit determines that the calcium ion content of the said 1st mixture satisfies the standard requirement, add the weighed hydrolyzed egg yolk powder, colostrum basic protein, whey protein powder, N-acetylneuraminic acid, lactoferrin, bovine colostrum, docosahexaenoic acid, tryptophan, lysine, apples and vitamins into the said mixer (1) in order through the 3rd feed inlet (13), start the said stirring propeller (14), and mix the mixture evenly to obtain the 2nd mixture;

Step 4: Convey the said 2nd mixture to the packaging machine (6) through the powder conveying pipe (18) for sub-packaging;

During the process of generating the 1st mixture, the central control unit introduces the 1st mixture to the calcium ion detector (2) through controlling the 1st powder outlet (16), measures the actual calcium ion, and then adds other minor ingredients provided that the calcium ion content satisfies the standard requirement. If the said central control unit determines that the calcium ion content fails to satisfy the standard requirement, the central control unit determines the increase of milk calcium or collagen peptide according to the calcium ion content and pH value of the 1st mixture solution so as to adjust the calcium ion content of the 1st mixture;

During the said process of generating the 2nd mixture, the said central control unit introduces the 2nd mixture into the milk powder laser particle size analyzer (3) through controlling the 2nd powder outlet (17), analyzes the particle size of the 2nd mixture, and then determines whether the 2nd mixture is evenly mixed according to the analysis results and the optimal water dissolution temperature when the mixture is evenly mixed..

In this embodiment, the external packages of various minor ingredients comprise the external packages of the milk calcium, collagen peptide, hydrolyzed egg yolk powder, colostrum basic protein, whey protein powder, N-acetylneuraminic acid, lactoferrin, bovine colostrum, docosahexaenoic acid, tryptophan, lysine, apple powder and vitamins, among others. If only a small amount of the 1st mixture is introduced to the calcium ion detector (2) through the powder outlet when the calcium ion content of the said 1st mixture is measured, a small amount of hydrochloric acid needs to be added during the measuring process to convert the 1st solid mixture into a solution. After the optimal water dissolution temperature is determined, the optimal water dissolution temperature of the current batch of milk powder should be written on the milk powder tank during the sub-packaging process. The said optimal water dissolution temperature is also called the optimal brewing temperature. The nutritional value of the milk powder brewed at the optimal water dissolution temperature is much easier to be absorbed than that brewed at other temperatures. The milk calcium, also known as whey calcium, is a type of whey inorganic salt concentrates. The inorganic salt source with the good nutritional value is easy to be digested and absorbed, and can supplement the calcium and promote the height growth. Vitamins include vitamin A, vitamin B, vitamin C, vitamin D and vitamin E. The docosahexaenoic acid is abbreviated as DHA. The whey protein powder contains immunoglobulin IgG, which can enhance the immunity of children.

Specifically, the embodiment of the present invention measures the actual calcium ion content of the 1st mixture with the calcium ion detector (2), and adds other minor ingredients provided that the actual calcium ion content satisfies the standard requirement. If the calcium ion content fails to satisfy the standard requirement, the present invention determines the increase of milk calcium or collagen peptide according to the calcium ion content and pH value of the 1st mixture solution so as to adjust the calcium ion content. Through analyzing the particle size of the 2nd mixture with the milk powder laser particle size analyzer (3), the present invention can determine whether the 2nd mixture has been mixed well according to the analysis results, and the optimal water dissolution temperature if the mixture has been mixed well. In this way, the present invention can determine the increase of the milk calcium or collagen peptide through precisely controlling the processing procedure of the dry process so as to increase the calcium ion content of the milk powder. Meanwhile, the present invention can determine the standard particle size of the milk powder and the optimal water dissolution temperature through the particle size analysis. In this way, the present invention can maximize the absorption of the nutrients in the milk powder to promote the height growth through effectively increasing the calcium ion content of the milk powder and determining the optimal water dissolution temperature.

Specifically, the said central control unit is configured with the standard calcium ion content, comprising the 1st standard calcium ion content g1 and the 2nd standard calcium ion content g2, where g1 < g2;
During the process of generating the 1st mixture, the said central control unit sets the actual calcium ion content measured with the calcium ion detector to g. After the configuration is completed, the central control unit compares the actual calcium ion content g with the standard calcium ion content:

If g<g1, the said central control unit determines that the calcium ion content of the 1st mixture fails to satisfy the standard requirement, and adds the milk calcium through controlling the said 2nd feed inlet (12);

If g1≤g < g2, the said central control unit determines that the calcium ion content of the 1st mixture satisfies the standard requirement;

If g≥g2, the said central control unit determines that the calcium ion content of the said 1st mixture fails to satisfy the standard requirement, and adds the collagen peptide through controlling the said 3rd feed inlet (13).

Specifically, the embodiment of the present invention determines whether the calcium ion content of the 1st mixture satisfies the standard requirement through comparing the actual calcium ion content g with the standard calcium ion content, and then determines the increase of the milk calcium or collagen peptide through precisely controlling the processing procedure of the dry process so as to increase the calcium ion content of the milk powder. Meanwhile, the present invention determines the standard particle size of the milk powder and the optimal water dissolution temperature through the particle size analysis. In this way, the present invention can maximize the absorption of the nutrients in the milk powder to promote the height growth through effectively increasing the calcium ion content of the milk powder and determining the optimal water dissolution temperature.

Specifically, the said central control unit is configured with the viscosity and the coefficient of the calcium ion content difference. The said standard viscosity comprises the 1st standard viscosity $\eta 1$, the 2nd standard viscosity $\eta 2$ and the 3rd standard viscosity $\eta 3$, where $\eta 1 < \eta 2 < \eta 3 < 2.5$. The coefficient of the calcium ion content difference comprises the 1st coefficient $\delta 1$, the 2nd coefficient $\delta 2$, the 3rd coefficient $\delta 3$ and the 4th coefficient $\delta 4$ thereof, all of which are not equal to each other;

If the said central control unit determines that the calcium ion content of the said 1st mixture fails to satisfy the standard requirement, and adds the milk calcium through controlling the said 2nd feed inlet (12), the central control unit measures the viscosity through introducing the 1st mixture solution in the said calcium ion detector (2) to the viscosity detector (5) via the 1st solution outlet (21), and sets the actually measured viscosity to $\eta$. After the configuration is completed, the central control unit compares the actual viscosity $\eta$ with the standard viscosity:

If $\eta<\eta 1$, the said central control unit selects $\delta 1$ to calculate the calcium ion content difference;

If $\eta 1\leq\eta<\eta 2$, the said central control unit selects $\delta 2$ to calculate the calcium ion content difference;

If $\eta 2\leq\eta<\eta 3$, the said central control unit selects $\delta 3$ to calculate the calcium ion content difference;

If $\eta\geq\eta 3$, the said central control unit selects $\delta 4$ to calculate the calcium ion content difference;

If the said central control unit selects the i-th coefficient $\delta i$ of the calcium ion content difference to calculate the calcium ion content difference, the central control unit calculates the calcium ion content difference with the formula of $\triangle g=(g1-g)\times\delta i$, and sets i=1, 2, 3 and 4.

The technical staff in this field should understand that the measuring process of the viscosity detector (5) is to pour the solution into the viscosity detector for measurements, which is a conventional technique in this field and will not be explained in details.

In this embodiment, only a small amount of the 1st mixture solution in the said calcium ion detector (2) is poured into the viscosity detector (5) through the solution outlet so as to measure the viscosity.

Specifically, the embodiment of the present invention determines the coefficient of the calcium ion content difference through comparing the actual viscosity $\eta$ with the standard viscosity so as to reduce the influence of other factors on the calcium ion content difference, and improve the accuracy of the calculated calcium ion content difference.

Specifically, the said central control unit is configured with the standard calcium ion content difference and milk calcium increase. The said standard calcium ion content difference comprises the 1st difference $\triangle g1$, the 2nd difference $\triangle g2$ and the 3rd difference $\triangle g3$ of the standard calcium ion content, where $\triangle g1 < \triangle g2 < \triangle g3 < 100$. The increase of the said milk calcium comprises the 1st increase mg1, the 2nd increase mg2, the 3rd increase mg3 and the 4th increase mg4 of the milk calcium, where mg1 < mg2 < mg3 < mg4.

After the calcium ion content difference $\triangle g$ is calculated, the said central control unit compares the calcium ion content difference $\triangle g$ with the standard calcium ion content difference:

If $\triangle g<\triangle g1$, the said central control unit adds the milk calcium through controlling the 2nd feed inlet (12), and sets the increase of the milk calcium to mg1;

If $\triangle g1\leq\triangle g < \triangle g2$, the said central control unit adds the milk calcium through controlling the 2nd feed inlet (12), and sets the increase of the milk calcium to mg2;

If $\triangle g2\leq\triangle g < \triangle g3$, the said central control unit adds the milk calcium through controlling the 2nd feed inlet (12), and sets the increase of the milk calcium to mg3;

If $\triangle g\geq\triangle g3$, the said central control unit adds the milk calcium through controlling the 2nd feed inlet (12), and sets the increase of the milk calcium to mg4.

Specifically, the embodiment of the present invention determines the increase of the milk calcium through comparing the calcium ion content difference $\triangle g$ with the standard calcium ion content difference, and further effectively improves the calcium ion content of the milk powder through precisely controlling the calcium ion content of the milk powder.

Specifically, the said central control unit is configured with the preset standard pH value, comprising the 1st preset standard pH value P1, the 2nd preset standard pH value P2, and the 3rd preset standard pH value P3, where P1 < P2 < P3 < 13;

If the said central control unit determines that the calcium ion content of the said 1st mixture fails to satisfy the standard requirement, and adds the collagen peptide through controlling the said 3rd feed inlet (13), the central control unit make measurements through introducing the 1st mixture solution in the said calcium ion detector (2) to the viscosity detector (4) via the 2nd solution outlet (22), and sets the actually measured viscosity to P. After the configuration is completed, the central control unit compares the actual viscosity P with the preset standard viscosity:

If P < P1, the said central control unit adds the collagen peptide through controlling the 3rd feed inlet (13), and sets the increase thereof to mj 1 = $10 \times mg1$;

If $P1 \leq P < P2$, the said central control unit adds the collagen peptide through controlling the 3rd feed inlet (13), and sets the increase thereof to mj2 = $20 \times mg2$;

If $P2 \leq P < P3$, the said central control unit adds the collagen peptide through controlling the 3rd feed inlet (13), and sets the increase thereof to mj3 = $30 \times mg3$;

If $P \geq P3$, the said central control unit adds the collagen peptide through controlling the 3rd feed inlet (13), and sets the increase thereof to mj4 = $40 \times mg3$.

The technical staff in this field should understand that the measuring process of the pH detector (4) is to pour the solution into the pH detector for measurements, which is a conventional technique in this field and will not be explained in details.

Specifically, the embodiment of the present invention determines the increase of the collagen peptide through comparing the actual pH value P with the preset standard pH value, and further effectively improves the calcium ion content of the milk powder through precisely controlling the calcium ion content of the milk powder.

During the process of generating the said 2nd mixture provided that the said central control unit determines that the calcium ion content of the 1st mixture satisfies the standard requirement, specifically, the central control unit obtains the actual average particle size of the 2nd mixture, and records it as Lp through comparing the analytical line spectrum of the actual particle size obtained from the milk powder laser particle size analyzer (3) with the analytical line spectrum of the standard particle size saved in the central control unit. Meanwhile, the central control unit is configured with the standard average particle size L0. After the configuration is completed, the central control unit compares the actual average particle size Lp with the standard average particle size L0:

If Lp>L0, the said central control unit determines that the 2nd mixture is not mixed well, so it starts the crushing propeller (15) to crush the 2nd mixture;

If Lp≤L0, the said central control unit determines that the 2nd mixture has been mixed evenly.

Specifically, the embodiment of the present invention determines whether the 2nd mixture has been mixed well through comparing the actual average particle size Lp with the standard average particle size L0, and then maximize the absorption of nutrients in the milk powder for increasing the children's height through effectively increasing the calcium ion content of the milk powder and determining the optimal water temperature.

Specifically, the said central control unit is configured with the preset average particle size difference, and the rotation speed and crushing time of the crushing propeller (15). The said preset average particle size difference comprises the 1st preset average particle size difference ▲L1, the 2nd preset average particle size difference AL2 and the 3rd preset average particle size difference △L3, where △L1 < △L2 < △L3 < 100;

The said rotation speed of the crushing propeller (15) comprises the 1st rotation speed V1, the 2nd rotation speed V2, the 3rd rotation speed V3 and the 4th rotation speed V4 of the crushing propeller (15), where V1<V2<V3<V4<3,000 r/min. The said crushing time of the crushing propeller (15) comprises the 1st crushing time t1, the 2nd crushing time t2, the 3rd crushing time t3 and the 4th crushing time t4 of the crushing propeller (15), where 11 <t2<t3<t4<30 min;

If the said central control unit determines that the 2nd mixture has not been mixed well, and starts the crushing propeller (15) to crush the 2nd mixture, the central control unit calculates the average particle size difference △L with the following formula:

$$\triangle L = Lp - L0;$$

After the calculation is completed, the said central control unit compares the average particle size difference $\triangle L$ with the preset average particle size difference as follows:

If $\triangle L < \triangle L1$, the said central control unit determines that the rotation speed of the said crushing propeller (15) is V1, and the crushing time thereof is 11;

If $\triangle L1 \leq \triangle L < \triangle L2$, the said central control unit determines that the rotation speed of the said crushing propeller (15) is V2, and the crushing time thereof is t2;

If $\triangle L2 \leq \triangle L < \triangle L3$, the said central control unit determines that the rotation speed of the said crushing propeller (15) is V3, and the crushing time thereof is t3;

If $\triangle L \geq \triangle L3$, the said central control unit determines that the rotation speed of the said crushing propeller (15) is V4, and the crushing time thereof is t4;

If the said central control unit determines that the rotation speed of the said crushing propeller (15) is Vi, and the crushing time thereof is ti, the central control unit adjusts the rotation speed thereof to Vi and the crushing time thereof to ti through controlling the regulating valve (151) of the crushing propeller (15). Afterwards, the central control unit starts the crushing propeller (15), and sets i=1, 2, 3 and 4.

In this embodiment, the crushing time is the time period from the beginning of the rotation of the crushing propeller (15) to the end of the rotation thereof.

Specifically, the embodiment of the present invention determines the rotation speed and crushing time of the crushing propeller (15) through comparing the average particle size difference $\triangle L$ with the preset average particle size difference so as to ensure that the particle size of the said milk powder involved in the present invention is within the standard particle size, and then maximize the absorption of the nutrients in the milk powder for increasing the children's height through effectively increasing the calcium ion content of the milk powder.

Specifically, the milk powder comprises the raw ingredients and minor ingredients with the following parts by weight. The raw ingredient component is 400-600 parts of whey powder. The minor ingredient components are 20-50 parts of milk calcium, 10-20 parts of collagen peptide, 5-10 parts of hydrolyzed egg yolk powder, 11-15 parts of colostrum basic protein, 50-70 parts of whey protein powder, 1-3 parts of N-acetylneuraminic acid, 0.5-0.9 part of lactoferrin, 10-15 parts of bovine colostrum, 3-5 parts of docosahexaenoic acid, 2-7 parts of tryptophan, 1-6 parts of lysine, 0.5-1.2 parts of apples, and 25-31 parts of vitamins.

Specifically, the milk calcium involved in the embodiment of the present invention can supplement the calcium, increase the height growth, and promote the collagen structure at the low calcium level so as to improve the bone strength, that is to prevent the osteoporosis. The hydrolyzed egg yolk powder not only prevents the children's osteoporosis, but also promotes their bone growth effectively through stimulating bone bud cells and thus promoting the production of the bone growth factor. The colostrum basic protein promotes the growth of bone cells, increases the bone density and bone weight, which is beneficial to the growth of children. The whey protein powder contains immunoglobulin IgG, which can enhance children's immunity. The sialic acid in the N-acetylneuraminic acid can prevent the invasion of germs. The lactoferrin can regulate the immunity and defend against pathogenic microorganisms. The tryptophan can promote growth and increase appetite. The lysine can increase the calcium absorption, and promote the bone growth. The apple can supplement minerals and vitamins. The vitamin can promote the calcium absorption. Compared with the prior art, the milk powder described in the present invention has the significantly increased calcium ion content and is rich in nutrients, so it can effectively promote the children's height growth.

Embodiment 1

A milk powder preparation formula to increase the children's height, comprising the following parts by weight: 400 parts of whey powder, 20 parts of milk calcium, 10 parts of collagen peptide, 5 parts of hydrolyzed egg yolk powder, 11 parts of colostrum basic protein, 50 parts of whey protein powder, 1 part of N-acetylneuraminic acid, 0.5 part of lactoferrin, 10 parts of bovine colostrum, 3 parts of docosahexaenoic acid, 2 parts of tryptophan, 1 part of lysine, 0.5 part of apples, and 25 parts of vitamins.

Embodiment 2

A milk powder preparation formula to increase the children's height, comprising the following parts by weight: 600 parts of whey powder, 50 parts of milk calcium, 20 parts of collagen peptide, 10 parts of hydrolyzed egg yolk powder, 15 parts of colostrum basic protein, 70 parts of whey protein powder, 3 parts of N-acetylneuraminic acid, 0.9 part of lactoferrin, 15 parts of bovine colostrum, 5 parts of docosahexaenoic acid, 7 parts of tryptophan, 6 parts of lysine, 1.2 parts of apples, and 31 parts of vitamins.

Embodiment 3

A milk powder preparation formula to increase the children's height, comprising the following parts by weight: 500 parts of whey powder, 40 parts of milk calcium, 15 parts of collagen peptide, 7 parts of hydrolyzed egg yolk powder, 15 parts of colostrum basic protein, 60 parts of whey protein powder, 2 parts of N-acetylneuraminic acid, 0.8 part of lactoferrin, 12 parts of bovine colostrum, 4 parts of docosahexaenoic acid, 5 parts of tryptophan, 4 parts of lysine, 1 part of apples, and 28 parts of vitamins.

The nutrients of the milk powder obtained from the embodiment 3 are measured, and the measurement results are shown in Table 1:

Table 1

| Item | Unit | Content (per 100g) | NRV(%) | Item | Unit | Content (per 100g) | NRV(%) |
|---|---|---|---|---|---|---|---|
| Energy | KJ | 1844 | 22% | Vitamin E | mga-TE | 10 | 30% |
| Protein | g | 18 | 30% | Na | mg | 400 | 21% |
| Fat | g | 20 | 23% | Calcium | mg | 900 | 81% |
| Carbohydrate | g | 55 | 18% | Iron | mg | 7.5 | 53% |
| Vitamin A | UgRE | 460 | 58% | Zinc | mg | 5.5 | 42% |
| Vitamin C | mg | 40.5 | 40% | Selenium | ug | 15 | 36% |
| Vitamin D | ug | 6.5 | 150% | Lactoferrin | mg | 8 | / |

In the said table, NPV represents the nutrient reference value. The nutrient content in the nutrition label should be expressed with the content value per 100 grams (ml) and/or per serving, and the percentage of the nutrient content over the reference value (NRV) at the same time.

## Claims

1. A milk powder preparation method to increase the children's height, wherein the preparation method comprises:

Step 1: sterilizing packages of whey powder and various minor ingredients, mixers and packaging machines;
Step 2: adding the said whey powder into the said mixer through a 1st feed inlet, adding milk calcium into the said mixer through a 2nd feed inlet, starting a stirring propeller, and mixing the mixture evenly to obtain a 1st mixture;
Step 3: if a central control unit determines that a calcium ion content of the said 1st mixture satisfies a standard requirement, adding weighed hydrolyzed egg yolk powder, colostrum basic protein, whey protein powder, N-acetylneuraminic acid, lactoferrin, bovine colostrum, docosahexaenoic acid, tryptophan, lysine, apples and vitamins into the said mixer in order through a 3rd feed inlet, start the said stirring propeller, and mix the mixture evenly to obtain a 2nd mixture;
Step 4: conveying the said 2nd mixture to the packaging machine through a powder conveying pipe for sub-packaging;
during the said process of generating the 1st mixture, the central control unit introduces the 1st mixture into a calcium ion detector through controlling a 1st powder outlet, measures an actual calcium ion content of the 1st mixture, and then adds other minor ingredients provided that the actual calcium ion content satisfies the standard requirement; if the said central control unit determines that the calcium ion content fails to satisfy the standard requirement, the central control unit determines the increase of the milk calcium or collagen peptide according to the calcium ion content and pH value of the 1st mixture solution so as to adjust the calcium ion content of the 1st mixture;

wherein the said central control unit is configured with the standard calcium ion content, comprising the 1st standard calcium ion content g1 and the 2nd standard calcium ion content g2, where g1 < g2;

during the process of generating the 1st mixture, the said central control unit sets the actual calcium ion content measured with the calcium ion detector to g, after the configuration is completed, the central control unit compares the actual calcium ion content g with the standard calcium ion content:

if g<g1, the said central control unit determines that the calcium ion content of the 1st mixture fails to satisfy the standard requirement, and adds the milk calcium through controlling the said 2nd feed inlet;

if g1≤g < g2, the said central control unit determines that the calcium ion content of the 1st mixture satisfies the standard requirement; and

if g≥g2, the said central control unit determines that the calcium ion content of the said 1st mixture fails to satisfy the standard requirement, and adds the collagen peptide through controlling the said 3rd feed inlet;

during the said process of generating the 2nd mixture, the said central control unit introduces the 2nd mixture into a milk powder laser particle size analyzer through controlling a 2nd powder outlet, analyzes a particle size of the 2nd mixture, then determines whether the 2nd mixture is evenly mixed according to analysis results and the optimal water dissolution temperature when the mixture is evenly mixed;

during the process of generating the said 2nd mixture provided that the said central control unit determines that the calcium ion content of the 1st mixture satisfies the standard requirement, the central control unit obtains an actual average particle size of the 2nd mixture, and records it as Lp through comparing the analytical line spectrum of the actual particle size obtained from the milk powder laser particle size analyzer with an analytical line spectrum of the standard particle size saved in the central control unit; meanwhile, the central control unit is configured with a standard average particle size L0, after the configuration is completed, the central control unit compares the actual average particle size Lp with the standard average particle size L0:

if Lp>L0, the said central control unit determines that the 2nd mixture has not been mixed well, so it starts a crushing propeller to crush the 2nd mixture;

if Lp≤L0, the said central control unit determines that the 2nd mixture has been mixed evenly;

the said central control unit is configured with a preset average particle size difference, and a rotation speed and a crushing time of the crushing propeller; the said preset average particle size difference includes the 1st preset average particle size difference $\triangle L1$, the 2nd preset average particle size difference $\triangle L2$ and the 3rd preset average particle size difference $\triangle L3$, where $\triangle L1 < \triangle L2 < \triangle L3 < 100$;

the said rotation speed of the crushing propeller includes a 1st rotation speed V1, a 2nd rotation speed V2, a 3rd rotation speed V3 and a 4th rotation speed V4 of the crushing propeller, where V1<V2<V3<V4<3,000 r/min; the said crushing time of the crushing propeller includes a 1st crushing time t1, a 2nd crushing time t2, a 3rd crushing time t3 and a 4th crushing time t4 of the crushing propeller, where 11 <t2<t3<t4<30 min;

if the said central control unit determines that the 2nd mixture has not been mixed well, and starts the crushing propeller to crush the 2nd mixture, the central control unit calculates the average particle size difference $\triangle L$ with the following formula:

$$\triangle L = Lp - L0;$$

after the calculation is completed, the said central control unit compares the average particle size difference $\triangle L$ with the preset average particle size difference as follows:

if $\triangle L < \triangle L1$, the said central control unit determines that the rotation speed of the said crushing propeller is V1, and the crushing time thereof is t1;

if $\triangle L1 \leq \triangle L < \triangle L2$, the said central control unit determines that the rotation speed of the said crushing paddle is V2, and the crushing time thereof is t2;

if $\triangle L2 \leq \triangle L < \triangle L3$, the said central control unit determines that the rotation speed of the said crushing propeller is V3, and the crushing time thereof is t3;

if $\triangle L \geq \triangle L3$, the said central control unit determines that the rotation speed of the said crushing propeller is V4, and the crushing time thereof is t4;

if the said central control unit determines that the rotation speed of the said crushing propeller is Vi, and the crushing time thereof is ti, the central control unit adjusts the rotation speed thereof to Vi and the crushing time thereof to ti through controlling a regulating valve of the crushing propeller; afterwards, the central control unit starts the crushing propeller, and sets i = 1, 2, 3 and 4.

2. A milk powder preparation method to increase the children's height according to claim 1, wherein the said central control unit is configured with the standard viscosity and the coefficient of the calcium ion content difference; the said standard viscosity comprises a 1st standard viscosity $\eta1$, a 2nd standard viscosity $\eta2$ and a 3rd standard viscosity $\eta3$, where $\eta1 < \eta2 < \eta3 < 2.5$; the coefficient of the calcium ion content difference comprises a 1st coefficient 61, a 2nd coefficient $\delta2$, a 3rd coefficient $\delta3$ and a 4th coefficient $\delta4$ thereof, all of which are not equal to each other; if the said central control unit determines that the calcium ion content of the said 1st mixture fails to satisfy the standard requirement, and adds the milk calcium through controlling the said 2nd feed inlet, the central control unit measures the viscosity through introducing the 1st mixture solution in the said calcium ion detector via a 1st solution outlet to a viscosity detector, and sets the actually measured viscosity to $\eta$, after the configuration is completed, the central control unit compares the actual viscosity $\eta$ with the standard viscosity:

if $\eta<\eta1$, the said central control unit selects 61 to calculate the calcium ion content difference;
if $\eta1\leq\eta < \eta2$, the said central control unit selects $\delta2$ to calculate the calcium ion content difference;
if $\eta2\leq\eta < \eta3$, the said central control unit selects $\delta3$ to calculate the calcium ion content difference;
if $\eta\geq\eta3$, the central control unit selects $\delta4$ to calculate the calcium ion content difference;
if the said central control unit selects the i-th coefficient $\delta i$ of the calcium ion content difference to calculate the calcium ion content difference, the central control unit calculates the calcium ion content difference with the formula of $\triangle g = (g1-g)\times\delta i$, and sets i=1, 2, 3 and 4.

3. A milk powder preparation method to increase the children's height according to claim 2, wherein the said central control unit is configured with the standard calcium ion content difference and the milk calcium increase; the said standard calcium ion content difference comprises a 1st difference $\triangle g1$, a 2nd difference $\triangle g2$ and a 3rd difference $\triangle g3$ of the standard calcium ion content, where $\triangle g1 < \triangle g2 < \triangle g3 < 100$; the increase of the said milk calcium comprises a 1st increase mg1, a 2nd increase mg2, a 3rd increase mg3 and a 4th increase mg4 of the milk calcium, where mg1 < mg2 < mg3 < mg4;
after the calcium ion content difference $\triangle g$ is calculated, the said central control unit compares the calcium ion content difference $\triangle g$ with the standard calcium ion content difference:

if $\triangle g < \triangle g1$, the said central control unit adds the milk calcium through controlling the 2nd feed inlet, and sets the increase of the milk calcium to mg1;
if $\triangle g1\leq\triangle g < \triangle g2$, the said central control unit adds the milk calcium through controlling the 2nd feed inlet, and sets the increase of the milk calcium to mg2;
if $\triangle g2\leq\triangle g < \triangle g3$, the said central control unit adds the milk calcium through controlling the 2nd feed inlet, and sets the increase of the milk calcium to mg3;
if $\triangle g\geq\triangle g3$, the said central control unit adds the milk calcium through controlling the 2nd feed inlet, and sets the increase of the milk calcium to mg4.

4. A milk powder preparation method to increase the children's height according to claim 3, wherein the said central control unit is configured with a preset standard pH value, comprising a 1st preset standard pH value, a 2nd preset standard pH value, and a 3rd preset standard pH value, where P1 < P2 < P3 < 13;
if the said central control unit determines that the calcium ion content of the said 1st mixture fails to satisfy the standard requirement, and adds the collagen peptide through controlling the said 3rd feed inlet, the central control unit make measurements through introducing the 1st mixture solution in the said calcium ion detector to the viscosity detector via the 2nd solution outlet, and sets the actually measured viscosity to P, after the configuration is completed, the central control unit compares the actual viscosity P with the preset standard viscosity:

if P < P1, the said central control unit adds the collagen peptide through controlling the 3rd feed inlet, and sets the increase thereof to mj 1 = $10\times$mg1;
if P1$\leq$P < P2, the said central control unit adds the collagen peptide through controlling the 3rd feed inlet, and sets the increase thereof to mj2 = $20\times$mg2;
if P2$\leq$P < P3, the said central control unit adds the collagen peptide through controlling the 3rd feed inlet, and sets the increase thereof to mj3 = $30\times$mg3;
if P$\geq$P3, the said central control unit adds the collagen peptide through controlling the 3rd feed inlet, and sets the increase thereof to mj4 = $40\times$mg3.

**Patentansprüche**

1. Ein Verfahren zur Herstellung von Milchpulver zur Förderung des Wachstums von Kinderkörpergröße, **gekennzeichnet durch**:

Schritt a, Sterilisation und Desinfektion der Verpackung des Molkenpulvers, der verschiedenen Zusatzstoffe, der Mischmaschine und der Verpackungsmaschine;

Schritt b, Einfüllen des Molkenpulvers in die Mischmaschine über den ersten Aufgabeschacht, Einfüllen von Milchkalzium in die Mischmaschine über den zweiten Aufgabeschacht, Aktivieren des Rührflügels zur gleichmäßigen Mischung zur Bildung einer ersten Mischung;

Schritt c, die Zentralsteuerungseinheit bestimmt, ob der Kalziumionengehalt der ersten Mischung den Standards entspricht, und fügt dann nacheinander über den dritten Zufuhrstutzen das abgewogene Eigelbpulver, das Anfangsmilchalkaliprotein, das Molkenproteinpulver, N-Acetyltyrosin, das Lactoferrin, die Kuh-Erstmilch, die Docosahexaensäure, Tryptophan, Lysin, Apfel und Vitamin in den Mischer ein und startet den Rührpropeller, um eine zweite Mischung zu bilden;

Schritt d, die zweite Mischung wird mit Hilfe eines Pulverförderrohrs zur Verpackungsmaschine transportiert und abgefüllt;

Während des Vorgangs zur Bildung der ersten Mischung steuert die Zentralsteuerungseinheit die erste Pulverentnahmestelle, um die erste Mischung in das Kalziumionendetektionsgerät zu leiten, um den tatsächlichen Kalziumionengehalt in der ersten Mischung zu überwachen, und fügt bei Erfüllung des Standards weitere Hilfsstoffe hinzu; Wenn die Zentralsteuerungseinheit feststellt, dass der Kalziumionengehalt nicht den Standards entspricht, reguliert sie den Kalziumgehalt oder die Zugabe von Kollagenpeptiden in der ersten Mischung entsprechend dem Kalziumionengehalt und der pH-Wert des Lösungsmittels der ersten Mischung;

In welcher die genannte zentrale Steuereinheit mit dem Standard-Calcium-Ionen-Gehalt konfiguriert ist, bestehend aus dem 1. Standard-Calcium-Ionen-Gehalt gl und dem 2. Standard-Calcium-Ionen-Gehalt g2, wobei gl < g2 ist;

während des Prozesses der Erzeugung der 1. Mischung legt die genannte zentrale Steuereinheit den tatsächlichen Calcium-Ionen-Gehalt, gemessen mit dem Calcium-Ionen-Detektor, auf g fest. Nach Abschluss der Konfiguration vergleicht die zentrale Steuereinheit den tatsächlichen Calcium-Ionen-Gehalt g mit dem Standard-Calcium-Ionen-Gehalt:

falls g < gl ist, bestimmt die genannte zentrale Steuereinheit, dass der Calcium-Ionen-Gehalt der 1. Mischung die Standardanforderung nicht erfüllt, und fügt das Milchcalcium durch Kontrolle des 2. Zulaufventils hinzu;

falls gl ≤ g < g2 ist, bestimmt die genannte zentrale Steuereinheit, dass der Calcium-Ionen-Gehalt der 1. Mischung die Standardanforderung erfüllt; und

falls g ≥ g2 ist, bestimmt die genannte zentrale Steuereinheit, dass der Calcium-Ionen-Gehalt der genannten 1. Mischung die Standardanforderung nicht erfüllt, und fügt das Kollagenpeptid durch Kontrolle des 3. Zulaufventils hinzu.

Während des Vorgangs zur Bildung der zweiten Mischung steuert die Zentralsteuerungseinheit die zweite Pulverentnahmestelle, um die zweite Mischung in den Milchpulver-Laserpartikelmesser einzufüllen und analysiert die Partikelgröße der zweiten Mischung basierend auf den Analyseergebnissen, um zu bestimmen, ob die zweite Mischung gleichmäßig gemischt ist, und um die optimale Wassertemperatur während der Mischung zu ermitteln;

Nachdem die Zentralsteuerungseinheit festgestellt hat, dass der Kalziumionengehalt der ersten Mischung den Standards entspricht, vergleicht die Zentralsteuerungseinheit das aus der Milchpulver-Laserpartikelmessung erhaltenen tatsächlichen Größenspektrum mit dem in der Zentralsteuerungseinheit gespeicherten Standard-Größenspektrum, um den tatsächlichen Durchschnittspartikeldurchmesser der zweiten Mischung zu erhalten und als Lp zu bezeichnen. Gleichzeitig setzt die Zentralsteuerungseinheit den Standarddurchschnittspartikeldurchmesser LO. Wenn die Einstellung abgeschlossen ist, vergleicht die Zentralsteuerungseinheit den tatsächlichen Durchschnittspartikeldurchmesser Lp mit dem Standarddurchschnittspartikeldurchmesser LO:

Wenn Lp > LO, entscheidet die Zentralsteuerungseinheit, dass die zweite Mischung nicht gleichmäßig gemischt ist, und startet den Zerkleinerungspropeller, um die zweite Mischung zu zerkleinern;

Wenn Lp ≤ LO, entscheidet die Zentralsteuerungseinheit, dass die zweite Mischung gleichmäßig gemischt ist;

Die Zentralsteuerungseinheit ist auch mit voreingestellten Durchschnittspartikeldifferenzen, Zerkleinerungspropellerdrehzahlen und Zerkleinerungspropellervermahlungszeiten eingestellt; Die voreingestellten Durchschnittspartikeldifferenzen umfassen die erste voreingestellte Durchschnittspartikeldifferenz $\Delta L1$, die zweite voreingestellte Durchschnittspartikeldifferenz $\Delta L2$ und die dritte voreingestellte Durchschnittspartikeldifferenz $\Delta L3$, wobei $\Delta L1 < \Delta L2 < \Delta L3 < 100$;

Die Zerkleinerungspropellerdrehzahlen umfassen die erste Zerkleinerungspropellerdrehzahl V1, die zweite Zerkleinerungspropellerdrehzahl V2, die dritte Zerkleinerungspropellerdrehzahl V3 und die vierte Zerkleinerungspropellerdrehzahl V4, wobei $V1 < V2 < V3 < V4 < 3000$ U / min; Die Zerkleinerungspropellervermahlungszeiten umfassen die erste Zerkleinerungspropellervermahlungszeit 11, die zweite Zerkleinerungspropellervermahlungszeit t2, die dritte Zerkleinerungspropellervermahlungszeit t3 und die vierte Zerkleinerungspropellervermahlungszeit t4, wobei $t1 < t2 < t3 < t4 < 30\min$;

Die Zentraleinheit bestimmt, dass das zweite Gemisch nicht gleichmäßig gemischt ist und startet den Zerkleinerungspropeller, um das zweite Gemisch zu zerkleinern. Die Zentraleinheit berechnet den durchschnittlichen Partikeldurchmesserunterschied $\Delta L$ nach der folgenden Formel:

$$\Delta L = Lp\text{-}LO;$$

Nach Abschluss der Berechnung vergleicht die Zentraleinheit den durchschnittlichen Partikeldurchmesserunterschied $\Delta L$ mit dem vorgegebenen durchschnittlichen Partikeldurchmesserunterschied:

Wenn $\Delta L < \triangle L1$, bestimmt die Zentraleinheit, dass die Rotationsgeschwindigkeit des Zerkleinerungspropellers V1 und die Zerkleinerungszeit t1 sind;

Wenn $\Delta L1 \leq \Delta L < \Delta L2$, bestimmt die Zentraleinheit, dass die Rotationsgeschwindigkeit des Zerkleinerungspropellers V2 und die Zerkleinerungszeit t2 sind;

Wenn $\Delta L2 \leq \Delta L < \Delta L3$, bestimmt die Zentraleinheit, dass die Rotationsgeschwindigkeit des Zerkleinerungspropellers V3 und die Zerkleinerungszeit t3 sind;

Wenn $\Delta L \geq \Delta L3$, bestimmt die Zentraleinheit, dass die Rotationsgeschwindigkeit des Zerkleinerungspropellers V4 und die Zerkleinerungszeit t4 sind;

Wenn die Zentraleinheit die Rotationsgeschwindigkeit des Zerkleinerungspropellers als Vi und die Zerkleinerungszeit als ti bestimmt, steuert die Zentraleinheit das Zerkleinerungsventil des Zerkleinerungspropellers, um die Rotationsgeschwindigkeit des Zerkleinerungspropellers auf Vi und die Zerkleinerungszeit auf ti einzustellen, wobei i = 1,2,3,4 festgelegt ist.

2. Das Verfahren zur Herstellung von Säuglingsnahrung zur Förderung des Wachstums der Körpergröße nach Anspruch 1, **gekennzeichnet durch** die Tatsache, dass die Zentraleinheit einen Standardviskosität- und einen Kalziumionen-Gehaltsdifferenzkoeffizienten aufweist; Die Standardviskosität umfasst die erste Standardviskosität $\eta1$, die zweite Standardviskosität $\eta2$ und die dritte Standardviskosität $\eta3$, wobei $\eta1 < \eta2 < \eta3 < 2,5$; Der Kalziumionen-Gehaltsdifferenzkoeffizient umfasst den ersten Kalziumionen-Gehaltsdifferenz-Koeffizienten $\delta1$, den zweiten Kalziumionen-Gehaltsdifferenz-Koeffizienten $\delta2$, den dritten Kalziumionen-Gehaltsdifferenz-Koeffizienten $\delta3$ und den vier Kalziumionen-Gehaltsdifferenz-Koeffizienten $\delta4$, und die verschiedenen Koeffizienten sind nicht gleich;

Wenn die Zentraleinheit feststellt, dass der Kalziumionen-Gehalt des ersten Gemischs den Standards nicht entspricht und steuert den Einlass des zweiten Futtermittels zur Zugabe von Milchcalcium, dann wird während des Bildvorgangs des ersten Gemischs die Lösung des ersten Gemischs aus dem Kalziumionen-Detektor in das Viskositätsmessgerät durch den ersten Lösungsauslass exportiert, um die Viskosität zu messen. Die Zentraleinheit stellt die gemessene tatsächliche Viskosität als $\eta$ ein. Nach Abschluss der Einstellung vergleicht die Zentraleinheit die tatsächliche Viskosität $\eta$ mit der Standardviskosität:

Wenn $\eta < \eta1$, wählt die Zentraleinheit $\delta1$ zur Berechnung der Calciumionenkonzentration;

Wenn $\eta1 \leq \eta < \eta2$ ist, wählt die Zentraleinheit $\delta2$ zur Berechnung der Calciumionenkonzentration;

Wenn $\eta2 \leq \eta < \eta3$, wählt die Zentraleinheit $\delta3$ zur Berechnung der Calciumionenkonzentration;

Wenn $\eta \geq \eta3$ ist, wählt die Zentraleinheit $\delta4$ zur Berechnung der Calciumionenkonzentration;

Wenn die Zentraleinheit den Koeffizienten $\delta i$ zur Berechnung der Calciumionenkonzentration $\delta i$ verwendet, berechnet die Zentraleinheit den Calciumionenbetrag $\Delta g = (g1\text{-}g) \times \delta i$, wobei i = 1,2,3,4 eingestellt ist.

3. Nach der in Anspruch 2 beschriebenen Methode zur Herstellung von Säuglingsmilchpulver, das das Wachstum der Körpergröße von Kindern fördert, besteht der Unterschied darin, dass die Zentraleinheit auch einen Standardwert für den Unterschied der Calciumionenkonzentration und eine Milch-Calciumzunahmemenge umfasst; Der Standardwert für den Unterschied der Calciumionenkonzentration umfasst den ersten Standardwert für den Unterschied der Calciumionenkonzentration $\triangle g1$, den zweiten Standardwert für den Unterschied der Calciumionenkonzentration Δg2 und den dritten Standardwert für den Unterschied der Calciumionenkonzentration Δg3, wobei Δg1 <Δg2 <Δg3 <100 ist; Die Milch-Calciumzunahmemenge umfasst die erste Zunahmemenge mg1, die zweite Zunahmemenge mg2, die dritte Zunahmemenge mg3 und die vierte Zunahmemenge mg4 von Milch Calcium, wobei mg1 <mg2 <mg3 <mg4 ist;

Wenn die Calciumionenkonzentration Δg berechnet ist, vergleicht die Zentraleinheit den Calciumionenunterschied Δg mit dem Standard-Calciumionenunterschied:

Wenn Δg <Δg1 ist, steuert die Zentraleinheit den zweiten Eingang, um Milch-Calcium hinzuzufügen, und stellt die Zunahmemenge von Milch-Calcium auf mg1 ein;

Wenn Δg1 ≤ Δg <Δg2 ist, steuert die Zentraleinheit den zweiten Eingang, um Milch-Calcium hinzuzufügen, und stellt die Zunahmemenge von Milch-Calcium auf mg2 ein;

Wenn Δg2 ≤ Δg <Δg3 ist, steuert die Zentraleinheit den zweiten Eingang, um Milch-Calcium hinzuzufügen, und stellt die Zunahmemenge von Milch-Calcium auf mg3 ein;

Wenn Δg ≥ Δg3 ist, steuert die Zentraleinheit den zweiten Eingang, um Milch-Calcium hinzuzufügen, und stellt die Zunahmemenge von Milch-Calcium auf mg4 ein.

4. Nach der in Anspruch 3 beschriebenen Methode zur Herstellung von Säuglingsmilchpulver, das das Wachstum der Körpergröße von Kindern fördert, besteht der Unterschied darin, dass die Zentraleinheit auch voreingestellte Standard-Säure-Base-Werte enthält, einschließlich des ersten voreingestellten Säure-Base-Werts P1, des zweiten voreingestellten Säure-Base-Werts P2 und des dritten voreingestellten Säure-Basewerts P3, wobei P1 <P2 <P3 <13 ist; Wenn die Zentraleinheit feststellt, dass die Calciumionenkonzentration der ersten Mischung dem Standard nicht entspricht und steuert, dass beim Zufügen von Kollagenpeptid durch den dritten Eingang die Lösung der ersten Mischung aus dem Calciumionendetektor zur Überprüfung in den Säure-Base-Detektor geleitet wird, stellt die Zentraleinheit den gemessenen tatsächlichen Säure-Basewert P ein. Wenn der tatsächliche Säure-Basewert eingestellt ist, vergleicht die Zentraleinheit den tatsächlichen Säure-Basewert P mit dem voreingestellten Standard-Säure-Basewert:

Wenn P <P1 ist, steuert die Zentraleinheit den dritten Eingang, um Kollagenpeptid hinzuzufügen, und stellt die Zunahmemenge von Kollagenpeptid auf mj 1 ein, wobei mj 1 = 10 × mg1 eingestellt ist.

Wenn P1 ≤ P < P2 ist, steuert die Zentraleinheit den dritten Futtereinzug und fügt Kollagenpeptide hinzu, wobei die Menge der Kollagenpeptide auf mj2 festgelegt wird und mj2 = 20 × mg2 gesetzt wird;

Wenn P2 ≤ P < P3 ist, steuert die Zentraleinheit den dritten Futtereinzug und fügt Kollagenpeptide hinzu, wobei die Menge der Kollagenpeptide auf mj3 festgelegt wird und mj3 = 30 × mg3 gesetzt wird;

Wenn P ≥ P3 ist, steuert die Zentraleinheit den dritten Futtereinzug und fügt Kollagenpeptide hinzu, wobei die Menge der Kollagenpeptide auf mj4 festgelegt wird und mj4 = 40 × mg3 gesetzt wird.

## Revendications

1. Procédé de préparation d'un lait en poudre qui favorise le développement de la taille des enfants et sa formule, qui se caractérisent par, qui inclut:

phase A , Désinfection et stérilisation des emballages extérieurs de la poudre de lactosérum et des matières accessoires, du mélangeur et de la machine de conditionnement;

phase B, Mettez la poudre de lactosérum dans le mélangeur via le premier port d'alimentation, et le calcium du lait dans le mélangeur via le deuxième port d'alimentation, démarrez la palette de mélange et mélange uniformément pour former le premier mélange;

Phase C, Lorsque l'unité centrale de commande de commande centrale détecte que la teneur en ions de calcium du premier mélange répond à la norme, ajoutez dans le mélangeur séquentiellement via le troisième port d'alimentation les matières accessoires bien pesés: poudre de jaune d'oeuf hydrolysée, protéine alcaline de colostrum, poudre de protéine de lactosérum, N-acide acétylneuraminique, lactoferrine, colostrum bovin, docosahexaène acide, tryptophane, lysine, pommes et vitamines et démarrez la palette de mélange et mélange uniformément pour former le second mélange;

phase D, Le second mélange est transporté vers la machine de conditionnement via le tuyau de transport de poudre pour l'emballage;

Pendant le processus de formation du premier mélange, l'unité centrale de commande de contrôle introduit, via le premier port d'exportation, le premier mélange dans le détecteur d'ions calcium afin de détecter la teneur réelle en ions calcium dans le premier mélange et ajoute d'autres matières accessoires lorsque la teneur réelle en ions calcium répond à la norme; Lorsque l'unité centrale de commande détermine que la teneur en ions calcium ne répond pas à la norme, l'unité centrale de commande détermine la quantité de calcium du lait ou la quantité de peptide de collagène à ajouter en fonction de la teneur en ions calcium et du pH du premier mélange afin d'ajuster la teneur en ions calcium dans le premier mélange.

L'unité de commande centrale mentionnée ci-dessus est réglée des teneurs en ions calcium standard, comprenant une première teneur en ions calcium standard g1 et une seconde teneur en ions calcium standard g2, où g1 < g2 ;

Pendant le processus de formation du premier mélange, l'unité de commande centrale règle la teneur réelle en ions calcium mesurée par le détecteur d'ions calcium comme g. Une fois le réglage terminé, l'unité centrale de commande compare la teneur réelle en ions calcium g avec les teneurs en ions calcium standard :

Si g<g1, l'unité de commande centrale mentionnée ci-dessus détermine que la teneur en ions calcium du premier mélange ne répond pas à la norme et commande pour ajouter du calcium au lait via le deuxième port d'alimentation ;

Si g1≤g<g2, l'unité de commande centrale détermine que la teneur en ions calcium du premier mélange répond à la norme ;

Si g≥g2, l'unité de commande centrale détermine que la teneur en ions calcium du premier mélange ne répond pas à la norme et commande pour ajouter du peptide de collagène via le troisième port d'alimentation ;

Pendant le processus de formation du second mélange, l'unité centrale de commande de commande introduit, via le deuxième port d'alimentation, le second mélange dans l'analyseur granulométrique laser de lait en poudre afin d'analyser la taille des particules du second mélange et de déterminer si le second mélange est un mélange uniforme et la température optimale d'infusion ;

Dans le processus de formation du second mélange, après que l'unité centrale de commande ait déterminé que la teneur en ions calcium du premier mélange répond à la norme, l'unité centrale de commande compare le spectre de raies d'analyse granulométrique réel analysé par l'analyseur granulométrique laser avec le spectre de raies d'analyse granulométrique standard stocké dans l'unité centrale de commande et obtient la taille moyenne réelle des particules du second mélange et l'enregistre sous forme de Lp, en même temps, l'unité centrale de commande est réglée avec une taille de particule moyenne standard LO. Une fois le réglage terminé, l'unité centrale compare la taille de particule moyenne réelle Lp avec la taille de particule moyenne standard LO :

Si Lp>LO, l'unité centrale de commande détermine que le second mélange n'est pas encore mélangé uniformément et démarre la palette de broyage pour écraser le second mélange ;

Si Lp≤LO, l'unité centrale de commande détermine que le second mélange a été mélangé uniformément ;

L'unité centrale de commande est également réglée des différences de taille de particule moyenne prédéfinies, des vitesses de broyage d'une palette et des temps de broyage d'une palette de broyage;

Les différences de taille de particule moyenne prédéfinies comprennent une première différence de taille de particule moyenne prédéfinie $\triangle L1$, une deuxième différence de taille de particule moyenne prédéfinie $\triangle L2$ et une troisième différence de taille de particule moyenne prédéfinie $\triangle L3$, où $\triangle L1 < \triangle L2 < \triangle L3 < 100$ ;

Les vitesses de broyage d'une palette comprennent la première vitesse de broyage d'une palette V1, la deuxième vitesse de broyage d'une palette V2, la troisième vitesse de broyage d'une palette V3 et la quatrième vitesse de broyage d'une palette V4 et V1 < V2 < V3 < V4 < 3000r/min; Les temps de broyage d'une palette de broyage comprennent le premier temps de broyage t1, le deuxième temps de broyage t2, le troisième temps broyage t3 et le quatrième temps broyage t4, où t1 <t2<t3 <t4< 30min;

Lorsque l'unité de commande centrale détermine que le second mélange n'est pas mélangé uniformément et démarre la palette de broyage pour écraser le second mélange, l'unité de commande centrale calcule la différence moyenne de taille des particules $\triangle L$, et sa formule de calcul est la suivante :

$$\triangle L = Lp\text{-}LO;$$

Lorsque le calcul est terminé, l'unité centrale de commande de commande compare la différence granulométrique moyenne $\triangle L$ avec la différence granulométrique moyenne prédéfinie :

Si $\triangle L < \triangle L1$, l'unité centrale de commande détermine que la vitesse de broyage d'une palette est V1 et le temps de broyage est t1 ;

Si $\Delta L1 \leq \Delta L < \Delta L2$, l'unité centrale de commande détermine que la vitesse de broyage d'une palette est V2 et le temps de broyage est t2 ;

Si $\Delta L2 \leq \Delta L < \Delta L3$, l'unité centrale de commande détermine que la vitesse de broyage d'une palette est V3 et le temps de broyage est t3 ;

Si $\Delta L \geq \Delta L3$, l'unité centrale de commande détermine que la vitesse de broyage d'une palette est V4 et le temps de broyage est t4;

Lorsque l'unité de commande centrale détermine que la vitesse de broyage d'une palette de broyage est Vi et que le temps de broyage est ti, l'unité de commande centrale commande la vanne de régulation d'une palette de pour ajuster la vitesse de broyage d'une palette à Vi et le temps de broyage à ti, puis démarre la palette de broyage, et définit i= 1,2,3,4.

2. Le procédé de préparation de lait en poudre pour favoriser le développement de la taille des enfants décrit ci-dessus dans la Réclamation 1, se **caractérise par**: L'unité de commande centrale est réglée avec les viscosités standards et les coefficients de différence de teneur en ions calcium; Les viscosités standards comprennent la première viscosité standard $\eta1$, la deuxième viscosité standard $\eta2$ et la troisième viscosité standard $\eta3$, où $\eta1 < \eta2 < \eta3 < 2.5$ ; Les coefficients de différence de teneur en ions calcium comprennent le premier coefficient de différence de teneur en ions calcium $\delta1$, le deuxième coefficient de différence de teneur en ions calcium $\delta2$, le troisième coefficient de différence de teneur en ions calcium $\delta3$ et le quatrième coefficient de différence de teneur en ions calcium $\delta4$, ces coefficients ne sont pas égaux les uns aux autres;

Lorsque l'unité de commande centrale détermine que la teneur en ions calcium du premier mélange ne répond pas à la norme, elle contrôle le deuxième port d'alimentation pour l'ajout de calcium du lait. La solution du premier mélange dans le détecteur d'ions calcium est exportée vers le détecteur de viscosité via la première sortie de solution pour la détection de viscosité, l'unité centrale de commande règle la viscosité réelle mesurée comme $\eta$. Une fois le réglage terminé, l'unité centrale de commande compare la viscosité réelle $\eta$ avec les viscosités standard :

Si $\eta < \eta1$, l'unité centrale de commande sélectionne $\delta1$ pour calculer la différence de teneur en ions calcium ;

Si $\eta1 \leq \eta < \eta2$, l'unité de commande centrale sélectionne $\delta2$ pour calculer la différence de teneur en ions calcium ;

Si $\eta2 \leq \eta < \eta3$, l'unité de commande centrale sélectionne $\delta3$ pour calculer la différence de teneur en ions calcium ;

Si $\eta \geq \eta3$, l'unité de commande centrale sélectionne $\delta4$ pour calculer la différence de teneur en ions calcium ;

Lorsque l'unité de commande centrale sélectionne le i-ème coefficient $\delta i$ de la différence de teneur en ions calcium pour calculer la différence de teneur en ions calcium, l'unité de commande centrale calcule la différence de teneur en ions calcium $\Delta g = (g1-g) \times \delta i$, et définit i= 1,2,3,4.

3. Le procédé de préparation de lait en poudre pour favoriser le développement de la taille des enfants décrit ci-dessus dans la Réclamation 2, se **caractérise par**: L'unité de commande centrale est également réglée avec les différences standard de teneur en ions calcium et les quantités d'augmentation de calcium du lait; Les différences standard de teneur en ions calcium comprennent la première différence standard de teneur en ions calcium $\Delta g1$, la deuxième différence standard de teneur en ions calcium $\Delta g2$ et la troisième différence standard de teneur en ions calcium $\Delta g3$ où $\Delta g1 < \Delta g2 < \Delta g3 < 100$; Les quantités d'augmentation de calcium du lait comprennent la première quantité d'augmentation du calcium du lait en mg1, la deuxième quantité d'augmentation du calcium du lait en mg2, la troisième quantité d'augmentation du calcium du lait en mg3 et la quatrième quantité d'augmentation du calcium du lait en mg4, où mg1 < mg2 < mg3 < mg4;

Lorsque le calcul de la différence de teneur en ions calcium $\Delta g$ est terminé, l'unité de commande centrale compare la différence de teneur en ions calcium $\Delta g$ avec les différences standard de teneur en ions calcium:

Si $\Delta g < \Delta g1$, l'unité de commande centrale contrôle le deuxième port d'alimentation pour ajouter du calcium du lait et règle la quantité d'augmentation de calcium du lait sur mg1;

Si $\Delta g1 \leq \Delta g < \Delta g2$, l'unité de commande centrale contrôle le deuxième port d'alimentation pour ajouter du calcium du lait et règle la quantité d'augmentation de calcium du lait sur mg2;

Si $\Delta g2 \leq \Delta g < \Delta g3$, l'unité de commande centrale contrôle le deuxième port d'alimentation pour ajouter du calcium du lait et règle la quantité d'augmentation de calcium du lait sur mg3.;

Si $\Delta g \geq \Delta g3$, l'unité de commande centrale contrôle le deuxième port d'alimentation pour ajouter du calcium du lait et règle la quantité d'augmentation de calcium du lait sur mg4.

4. Le procédé de préparation de lait en poudre pour favoriser le développement de la taille des enfants décrit ci-dessus dans la Réclamation 3, se **caractérise par**: L'unité de commande centrale est également dotée des pH standard prédéfinis, comprenant un premier pH standard prédéfini P1, un deuxième pH standard prédéfini P2 et un troisième pH standard prédéfini P3, où P1 <P2<P3 < 13;

Lorsque l'unité centrale de commande détermine que la teneur en ions calcium du premier mélange ne répond pas à la norme et contrôle le troisième port d'alimentation pour ajouter du peptide de collagène, la solution du premier mélange dans le détecteur d'ions calcium est exportée via la deuxième sortie de solution vers le détecteur de pH pour la détection, le pH réel mesuré est réglé sur P. Une fois le réglage terminé, l'unité centrale de commande compare le pH réel P avec les pH standard prédéfini:

Si P < P1, l'unité de commande centrale contrôle le troisième port d'alimentation pour ajouter du peptide de collagène et règle la quantité ajoutée de peptide de collagène sur mj 1, en définissant mj 1 = 10 × mg1;

Si P1≤P<P2, l'unité de commande centrale contrôle le troisième port d'alimentation pour ajouter du peptide de collagène et règle la quantité ajoutée de peptide de collagène sur mj2, en définissant mj2 =20×mg2;

Si P2≤P<P3, l'unité de commande centrale contrôle le troisième port d'alimentation pour ajouter du peptide de collagène et règle la quantité ajoutée de peptide de collagène sur mj3, en définissant mj3 =30×mg3;

Si P≥P3, l'unité de commande centrale contrôle le troisième port d'alimentation pour ajouter du peptide de collagène et règle la quantité ajoutée de peptide de collagène sur mj4, en définissant mj4 =40×mg3.

**FIG. 1**

| | 100 |
|---|---|
| Sterilize the packages of the whey powder and various minor ingredients, mixers and packaging machines. | |

| | 200 |
|---|---|
| Add the whey powder into the mixer through the 1st feed inlet, add the milk calcium into the mixer through the 2nd feed inlet, start the stirring propeller, and mix the mixture evenly to obtain the 1st mixture. | |

| | 300 |
|---|---|
| If the said central control unit determines that the calcium ion content of the 1st mixture satisfies the standard requirement, add the weighed hydrolyzed egg yolk powder, colostrum basic protein, whey protein powder, N-acetylneuraminic acid, and lactoferrin, among others, into the said mixer in order through the 3rd feed inlet, start the stirring propeller, and mix the mixture evenly to obtain the 2nd mixture. | |

| | 400 |
|---|---|
| Convey the said 2nd mixture to the packaging machine through the powder conveying pipe for sub-packaging. | |

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111937964 A
- EP 0520581 A1

- CN 110927029 A

**Non-patent literature cited in the description**

- Real-time monitoring of powder blend composition using near infrared spectroscopy. **O'MAHONY NIALL et al.** 2017 ELEVENTH INTERNATIONAL CONFERENCE ON SENSING TECHNOLOGY (ICST). IEEE, 04 December 2017, 1-6